# FASCICULE DE BREVET EUROPEEN

(11) **EP 1 932 738 B1**
(45) Date de publication et mention de la délivrance du brevet: **20.01.2010**
(21) Numéro de dépôt: 07120258.4
(22) Date de dépôt: 08.11.2007
(51) Int. Cl.: B60T 13/575, B60T 13/57, B60T 8/32

(54) **Servomoteur d'assistance pneumatique au freinage**
Pneumatischer Bremskraftverstärker
vacuum brake booster

(30) Priorité: 09.11.2006 FR 0609951
(43) Date de publication de la demande: 18.06.2008
(73) Titulaire: ROBERT BOSCH GMBH, 70442 Stuttgart (DE)
(72) Inventeur: Simon Bacardit, Juan, 08013 Barcelone (ES); Sacristan, Fernando, 08348 Cabrils (ES); Berthomieu, Bruno, 08015 Barcelone (ES); Anderson, Chris, 75002 Paris (FR)
(74) Mandataire: Hurwic, Aleksander Wiktor

(56) Documents cités:
- WO-A-2004/026653
- FR-A1- 2 782 044

## Description

La présente invention concerne un servomoteur d'assistance pneumatique d'un circuit de freinage, en particulier pour véhicule automobile.

Un circuit de freinage de véhicule automobile comporte une pédale de frein agissant sur un maître-cylindre pour transmettre une pression hydraulique à des freins de roues, l'effort exercé par le conducteur étant en général assisté par un servomoteur à dépression pneumatique.

Un servomoteur d'un type courant comprend une chambre de dépression et une chambre de travail contenues dans une enveloppe rigide et séparées par une membrane étanche et souple, solidaire d'un piston mobile axialement dans l'enveloppe. La chambre de dépression est reliée en permanence à une source de dépression tandis que la chambre de travail est reliée par une vanne trois voies soit à la chambre de dépression, soit à l'atmosphère environnante.

Le maître-cylindre du circuit de freinage est en général fixé sur l'enveloppe du servomoteur et comporte des pistons de mise en pression du liquide de frein. Le piston du servomoteur est déplacé par la membrane avec une force qui dépend de la différence de pression entre les chambres et qui s'ajoute à la force appliquée par une tige de commande reliée à la pédale de frein.

La vanne trois voies comprend un clapet porté par la tige de commande et coopérant avec le piston du servomoteur. Au repos, elle met en communication les deux chambres du servomoteur. Après une faible course de la tige de commande, elle ferme cette communication, puis, suivant l'avance de la tige de commande, elle relie la chambre de travail à l'atmosphère environnante pour laisser remonter la pression et assister le déplacement de la tige de commande.

Une première partie du déplacement de la tige de commande sert à déplacer les pistons du maître-cylindre pour fermer des clapets de communication avec un réservoir de liquide de frein ou avec des systèmes d'anti-patinage (ASR), de contrôle de trajectoire (ESP) ou de maintien du véhicule à l'arrêt sur une côte (Hill Holder). Ces systèmes sont alimentés en liquide de frein par un passage important formé dans le maître-cylindre en position de repos, de sorte que la course « morte » des pistons du maître-cylindre permettant de fermer ce passage peut constituer une fraction non négligeable de la course totale de la pédale, et nuit à l'efficacité du circuit de freinage.

Pour améliorer cette efficacité, un moyen connu consiste à réaliser une avance rapide sur une course prédéterminée du piston du servomoteur à partir d'un petit déplacement de la pédale pour fermer les clapets du maître-cylindre, ce qui permet de réduire la course morte de la pédale et de garder une course utile plus grande pour agir sur le circuit hydraulique.

En plus du moyen d'avance rapide, le servomoteur comprend en général un système de réaction hydraulique qui permet de transmettre à la pédale de frein une réaction correspond à la pression dans le circuit de freinage. La liaison entre le piston du servomoteur et le maître-cylindre comprend un piston de faible diamètre qui reçoit d'un côté la pression du circuit hydraulique et transmet de l'autre côté une force correspondante à un palpeur placé en bout d'un distributeur plongeur porté par la tige de commande. De cette manière, en cas de freinage brusque ou violent, le conducteur ressent à la pédale une réaction qui correspond à l'effort du freinage.

Toutefois, ce système connu est relativement complexe et a un coût relativement élevé.

WO 20041026653 et FR 2782044 décrivent des servomoteurs d'assistance au freinage avec des moyens de sur assistance commandés par une vitesse importante exercée sur la pédale de frein.

La présente invention a notamment pour but d'éviter ces inconvénients de façon simple, efficace et économique.

Elle propose à cet effet un servomoteur d'assistance pneumatique d'un circuit de freinage selon la revendication 1.

Un avantage essentiel du servomoteur selon l'invention est que le dispositif de réaction transmettant une force de réaction à la pédale est constitué d'un moyen simple, fiable et peu coûteux qui permet de réaliser un servomoteur économique tout en bénéficiant de fonctions évoluées.

Selon un mode préféré de l'invention, le disque de réaction et le palpeur sont circulaires et l'extrémité du palpeur en contact avec le disque de réaction a une surface réduite par rapport à celle du disque de réaction.

La surface du disque de réaction peut être au moins quatre fois supérieure à celle de cette extrémité du palpeur.

Selon une autre caractéristique de l'invention, le palpeur se trouve radialement à l'intérieur de la douille et axialement au niveau de l'extrémité avant de celle-ci.

Selon encore une autre caractéristique de l'invention, un jeu axial réduit est formé au repos entre l'extrémité arrière de la douille et le clapet de la vanne trois voies.

Ce jeu axial très réduit est par exemple de l'ordre de 0,2 millimètre.

Un jeu axial réduit mais supérieur au jeu entre l'extrémité arrière de la douille et le clapet, est formé au repos entre le palpeur et le disque de réaction et est par exemple de l'ordre de 0,3 millimètre.

L'invention sera mieux comprise et d'autres caractéristiques et avantages de celle-ci apparaîtront plus clairement à la lecture de la description qui suit, faite à titre d'exemple en référence aux dessins annexés dans lesquels :
- la figure 1 est une vue en coupe d'un servomoteur connu;
- la figure 2 est une vue en coupe du piston du servomoteur selon l'invention;
- les figures 3 à 6 représentent schématiquement différentes étapes du fonctionnement de ce servomoteur.
Par convention, ce qui est à droite dans les dessins est à l'arrière et ce qui est à gauche est à l'avant.

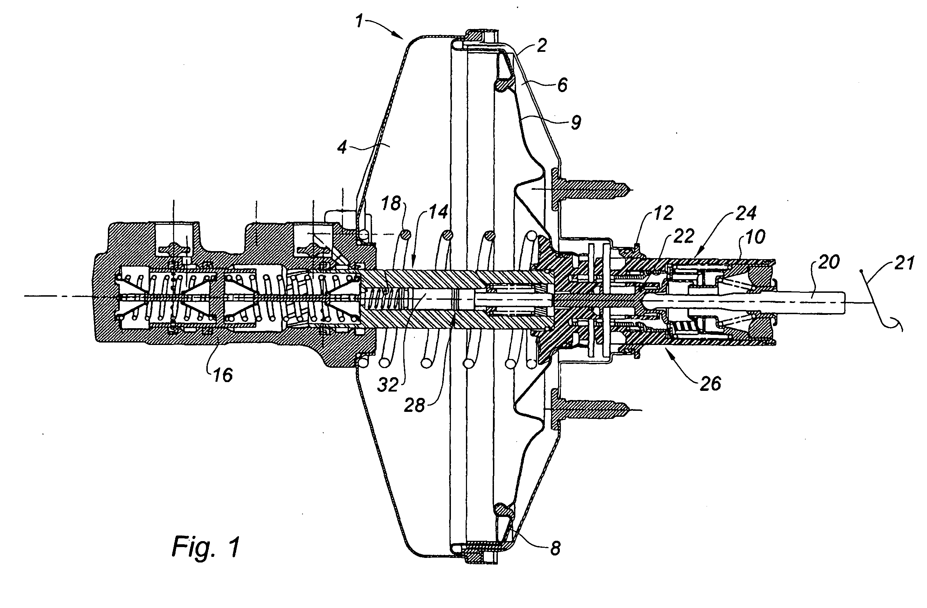

Le servomoteur 1 représenté en figure 1 comporte une enveloppe rigide 2 délimitant une enceinte fermée dans laquelle une chambre avant 4 et une chambre arrière 6 sont séparées de façon étanche par une membrane souple 8 disposée transversalement et dont la partie centrale est liée par l'intermédiaire d'une jupe 9 à un piston axial 10 monté coulissant de façon étanche dans une cheminée arrière 12 de l'enveloppe 2. Le piston 10 agit par l'intermédiaire d'une tige de poussée 14 sur les pistons d'un maître-cylindre 16 pour mettre en pression un circuit de freinage alimentant des freins agissant sur les roues du véhicule. Un ressort de rappel 18 est associé au piston 10 pour le solliciter vers l'arrière en permanence.

Une pédale de frein 21 agit par l'intermédiaire d'une tige de commande 20 sur un distributeur plongeur 22 guidé dans un passage axial du piston 10. Le distributeur plongeur 22 constitue un élément d'une vanne trois voies 24 qui va soit mettre en communication les deux chambres 4, 6, soit relier la chambre arrière 6 à l'atmosphère environnante. Une dépression est constamment maintenue dans la chambre avant 4 qui est reliée à une source de dépression.

Le servomoteur 1 comporte un moyen d'avance rapide 26 du piston 10, qui agit sur la vanne trois voies 24 pour qu'un petit mouvement de la tige de commande 20 vers l'avant à partir de la position de repos mette la chambre arrière 6 en communication avec l'atmosphère environnante, provoquant un déplacement vers l'avant du piston 10. A la fin d'une course prédéterminée, cette communication se referme et le maître-cylindre est de suite opérationnel sans course morte.

La tige de poussée 14 entre le piston 10 et les pistons du maître-cylindre 16 contient un dispositif de réaction hydraulique comportant un piston 32 avec des ressorts de correction, recevant d'un côté la pression du circuit hydraulique de freinage et transmettant de l'autre côté une force à un palpeur monté à l'avant du distributeur plongeur 22.

En cas d'efforts importants de freinage, la pression hydraulique du circuit de freinage modifiée par l'action des ressorts de correction exerce une force sur le piston 32 transmise par le distributeur plongeur 22 et la tige de commande 20 à la pédale de frein, permettant au conducteur de ressentir l'effort de freinage.

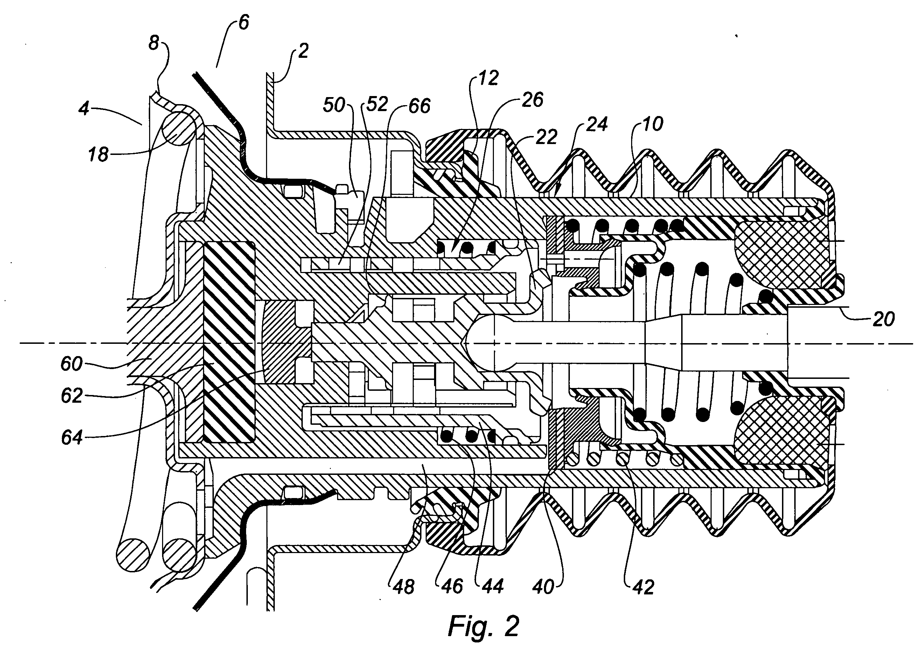

La figure 2 représente de façon détaillée un piston 10 de servomoteur selon l'invention, dans lequel un clapet 40 annulaire de la vanne trois voies est poussé par un ressort arrière 42 sur un épaulement annulaire du piston 10. Une douille 44 axialement coulissante entoure la partie avant du distributeur plongeur 22 et peut être appuyée par un ressort 46 sur la face avant du clapet 40 pour fermer le canal 48 de communication entre les chambres 4, 6. Le distributeur plongeur 22 comporte sur sa face arrière un siège circulaire d'appui sur le clapet 40 pour fermer la communication entre la chambre arrière 6 et l'atmosphère environnante.

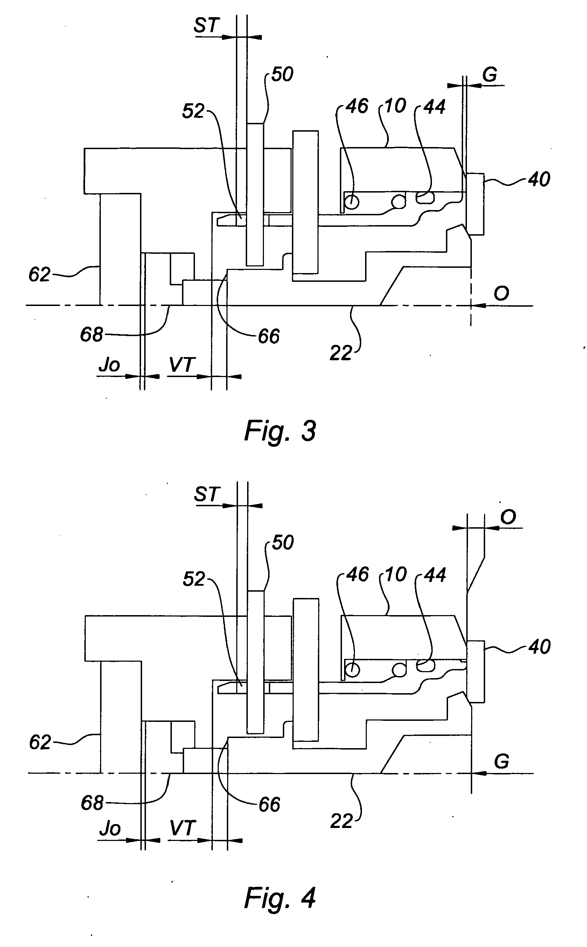

Le fonctionnement du moyen d'avance rapide du piston est représenté de façon détaillée aux figures 3 à 6. Au repos (figure 3), un jeu minimum G, de préférence proche de 0,2 millimètre, existe entre la douille 44 et le clapet 40 et établit une communication entre les chambres 4, 6. Le siège arrière du distributeur 22 est en appui sur le clapet 40. Un petit déplacement vers l'avant de la tige de commande sur une distance égale au jeu G comme représenté figure 4 déplace le distributeur 22, le piston 10 avance d'une distance G et le clapet 40 vient en appui sur le siège arrière de la douille 44, fermant la communication entre les chambres.

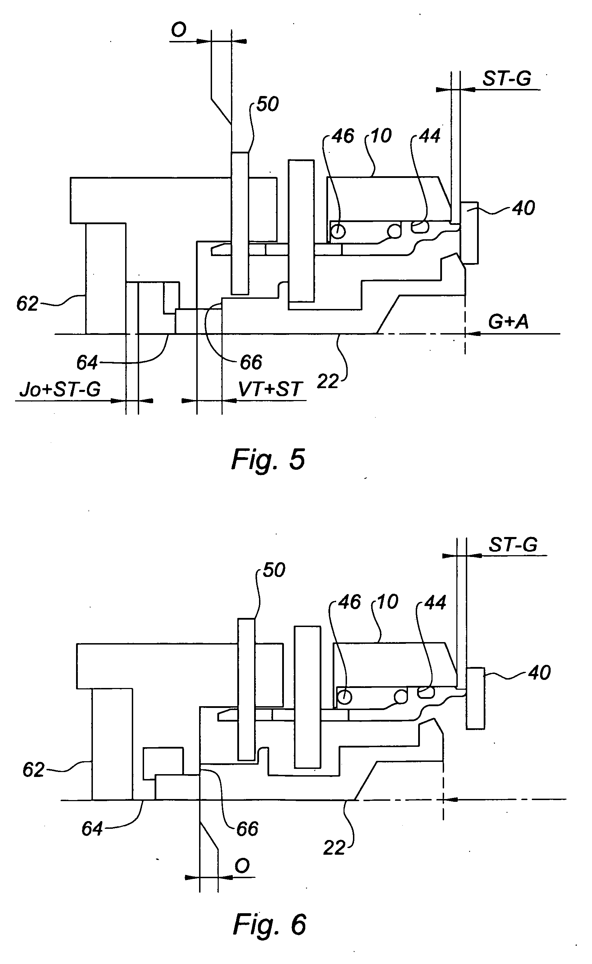

L'instant d'après, quand la tige de commande 20 a été déplacée vers l'avant sur une petite distance supplémentaire A comme représenté figure 5, le siège arrière du distributeur 22 est décollé du clapet 40 et la pression augmente dans la chambre arrière 6, de sorte que le piston 10 est déplacé vers l'avant par la différence de pression entre les chambres 4, 6. Sur une première course prédéterminée ST du piston 10, la douille 44 est désolidarisée de celui-ci et reste en place en maintenant fermée la communication entre les chambres. Au delà de cette course, le piston 10 entraîne la douille 44 par une clavette ou clé d'arrêt 50 liée au piston et qui vient en appui sur l'extrémité d'une fenêtre axiale 52 de la douille. Le clapet 40 avance aussi et vient en appui sur le distributeur 22 en fermant l'entrée d'air dans la chambre arrière 6.

Le piston 10 a ainsi parcouru une course prédéterminée ST pour fermer les clapets du maître-cylindre à partir d'un petit déplacement G+A de la pédale, ce qui permet de réserver la plus grande partie de la course de la pédale pour la partie utile du freinage.

Le piston 10 comporte à son extrémité avant une chambre circulaire recevant un disque de réaction 62 en matériau élastomère (figure 2). Une extrémité arrière évasée d'une tige de poussée 60 reliée aux pistons du maître-cylindre 16 prend appui sur toute la surface de ce disque. Cette chambre débouche à l'arrière dans une autre chambre du piston 10 ayant un diamètre sensiblement plus faible, dans laquelle coulisse un palpeur 64 situé à l'extrémité avant du plongeur 22. Un jeu JO légèrement supérieur au jeu G est formé au repos entre le palpeur 64 et le disque de réaction et est par exemple de l'ordre de 0,3 millimètre.

Le palpeur 64 se trouve radialement à l'intérieur de la douille 44 et axialement à l'avant de celle-ci et le disque de réaction et le palpeur sont circulaires, ce qui permet une bonne compacité de cette structure.

Le fonctionnement est le suivant : lors des freinages brutaux, l'avance du piston 10 est limitée par le passage d'entrée d'air dans la chambre arrière 6, ou lorsque le servomoteur est à saturation avec une chambre arrière 6 à la pression atmosphérique, le jeu JO s'annule et la tige de commande parcourt la course relative VT (figure 4) en comprimant le disque de réaction 62, puis l'effort s'exerce directement par l'épaulement 66 du plongeur 22 qui s'appuie sur le piston pneumatique 10, cet effort s'ajoutant à l'assistance fournie par le servomoteur.

Le disque 62 subit une compression sous l'effet de la force exercée en réaction par la tige 60 et s'appuie sur le palpeur 64 avec une certaine pression représentant la pression du circuit de freinage. La force transmise par le palpeur à la pédale de frein par l'intermédiaire du distributeur plongeur 22 et de la tige de commande permet au conducteur de ressentir l'effort de freinage. De préférence, la force de réaction s'exerçant sur le palpeur est au moins quatre fois inférieure à celle s'exerçant sur le maître-cylindre.

La course morte de la tige de commande étant réduite au jeu minimum G grâce au moyen d'avance rapide du piston pneumatique, l'utilisation d'un disque de réaction en élastomère est particulièrement intéressante car les jeux VT et JO sont aussi réduits. Cette combinaison permet par ailleurs de diminuer la sensation désagréable que l'on pourrait avoir quand le servomoteur d'assistance arrive à saturation et que le jeu VT s'annule.

## Revendications

1. - Servomoteur d'assistance pneumatique d'un circuit de freinage en particulier pour véhicule automobile, comprenant une chambre de dépression (4) et une chambre de travail (6) séparées par une membrane étanche et souple (8) solidaire d'un piston axial, un maître-cylindre (16) générant une pression hydraulique dans le circuit de freinage au moyen de pistons reliés au piston du servomoteur par une tige de poussée et par un dispositif de réaction, une douille (44) guidée en coulissement axial dans le piston (10) du servomoteur et associée avec ce piston à une vanne trois voies (24) portée par une tige de commande (20) reliée à une pédale de frein, la douille (44) étant indépendante du piston (10) du servomoteur sur une première course de ce piston à partir d'une position de repos et étant entraînée ensuite par ce piston lors d'un freinage, la tige de commande (20) entraînant un distributeur plongeur (22) guidé en coulissement axial dans le piston du servomoteur et comportant un siège arrière qui vient en appui sur un clapet (40) de la vanne trois voies pour isoler la chambre de travail de l'atmosphère environnante, le dispositif de réaction comprenant un disque de réaction (62) en caoutchouc ou en élastomère monté entre la tige (60) de poussée reliée aux pistons du maître-cylindre et un palpeur (64) monté dans le piston du servomoteur entre le disque de réaction (62) et le distributeur plongeur (22) pour transmettre à la pédale de frein une réaction élastique correspondant à l'effort de freinage, **caractérisé en ce que** la douille (44) constitue un moyen d'avance rapide (26) du piston (10), qui agit sur la vanne trois voies (24) pour qu'un petit mouvement de la tige de commande (20) vers l'avant à partir de la position de repos mette la chambre arrière (6) en communication avec l'atmosphère environnante, provoquant un déplacement vers l'avant du piston (10).

2. - Servomoteur pneumatique d'assistance selon la revendication 1,
**caractérisé en ce que** le disque de réaction (62) et le palpeur (64) sont circulaires et l'extrémité du palpeur (64) en contact avec le disque de réaction a une surface réduite par rapport à celle du disque de réaction (62).

3. - Servomoteur pneumatique d'assistance selon la revendication 2, **caractérisé en ce que** la surface du disque de réaction est au moins quatre fois supérieure à celle de ladite extrémité du palpeur.

4. - Servomoteur pneumatique d'assistance selon l'une des revendications 1 à 3, **caractérisé en ce que** le palpeur se trouve radialement à l'intérieur de la douille (44) et axialement au niveau de l'extrémité avant de celle-ci.

5. - Servomoteur pneumatique d'assistance selon l'une des revendications 1 à 4, **caractérisé en ce qu'**au repos, un jeu axial (G) réduit est formé entre l'extrémité arrière de la douille (44) et le clapet (40) de la vanne trois voies.

6. - Servomoteur pneumatique d'assistance selon la revendication 5, **caractérisé en ce que** le jeu axial (G) réduit est de l'ordre de 0,2 millimètre.

7. - Servomoteur pneumatique d'assistance selon la revendication 5 ou 6, **caractérisé en ce qu'**au repos un jeu axial (JO) réduit mais supérieur au jeu (G) entre l'extrémité arrière de la douille (44) et le clapet (40) de la vanne trois voies, est formé entre le palpeur (64) et le disque de réaction (62).

8. - Servomoteur pneumatique d'assistance selon la revendication 7, **caractérisé en ce que** le jeu axial (JO) entre le palpeur (64) et le disque de réaction est de l'ordre de 0,3 millimètre.

## Claims

1. Pneumatic booster for a braking circuit in particular for a motor vehicle, comprising a vacuum chamber (4) and a working chamber (6) separated by a sealed and flexible membrane (8) secured to an axial piston, a master cylinder (16) generating hydraulic pressure in the braking circuit by means of pistons connected to the piston of the booster via a push rod and via a reaction device, a bush (44) guided so as to slide axially in the piston (10) of the booster and associated with this piston with a three-way valve (24) supported by a control stem (20) connected to a brake pedal, the bush (44) being independent of the piston (10) of the booster on a first travel of this piston from a rest position and then being operated by this piston during a braking action, the control stem (20) operating a distributor plunger (22) guided so as to slide axially in the piston of the booster and comprising a rear seat which rests on a valve element (40) of the three-way valve in order to isolate the working chamber from the surrounding atmosphere, the reaction device comprising a reaction disk (62) made of rubber or of elastomer mounted between the push rod (60) connected to the pistons of the master cylinder and a sensor (64) mounted in the piston of the booster between the reaction disc (62) and the distributor plunger (22) in order to transmit to the brake pedal an elastic reaction corresponding to the braking force, **characterized in that** the bush (44) forms a means of rapid advance (26) of the piston (10), which acts on the three-way valve (24) so that a slight movement of the control stem (20) towards the front from the rest position places the rear chamber (6) in communication with the surrounding atmosphere, causing a forward movement of the piston (10).

2. Pneumatic booster according to Claim 1,
**characterized in that** the reaction disc (62) and the sensor (64) are circular and the end of the sensor (64) in contact with the reaction disc has a smaller surface area than that of the reaction disc (62).

3. Pneumatic booster according to Claim 2,
**characterized in that** the surface area of the reaction disc is at least four times greater than that of the said end of the sensor.

4. Pneumatic booster according to one of Claims 1 to 3, **characterized in that** the sensor is radially inside the bush (44) and axially at the front end of the latter.

5. Pneumatic booster according to one of Claims 1 to 4, **characterized in that**, at rest, a reduced axial clearance (G) is formed between the rear end of the bush (44) and the valve element (40) of the three-way valve.

6. Pneumatic booster according to Claim 5,
**characterized in that** the reduced axial clearance (G) is of the order of 0.2 millimetre.

7. Pneumatic booster according to Claim 5 or 6,
**characterized in that**, at rest, a reduced axial clearance (J0) that is reduced but greater than the clearance (G) between the rear end of the bush (44) and the valve element (40) of the three-way valve, is formed between the sensor (64) and the reaction disc (62).

8. Pneumatic booster according to Claim 7,
**characterized in that** the axial clearance (J0) between the sensor (64) and the reaction disc is of the order of 0.3 millimetre.

## Patentansprüche

1. Pneumatischer Unterstützungsservomotor eines Bremskreises, insbesondere für ein Kraftfahrzeug, mit einer Unterdruckkammer (4) und einer Arbeitskammer (6), die durch eine dichte, nachgiebige und mit einem axialen Kolben fest verbundene Membran (8) getrennt sind, einem Hauptzylinder (16), der mittels Kolben, die über eine Schubstange und über eine Reaktionsvorrichtung mit dem Kolben des Servomotors verbunden sind, einen hydraulischen Druck im Bremskreis erzeugt, einer Hülse (44), die axial gleitend im Kolben (10) des Servomotors geführt und mit diesem Kolben einem Dreiwegeventil (24) zugeordnet ist, das von einer mit einem Bremspedal verbundenen Steuerstange (20) getragen ist, wobei die Hülse (44) ausgehend von einer Ruhestellung auf einem ersten Weg des Kolbens (10) des Servomotors von diesem Kolben unabhängig ist und anschließend bei einer Bremsung von diesem Kolben mitgenommen wird, wobei die Steuerstange (20) einen Verteilertauchkolben (22) antreibt, der axial gleitend im Kolben des Servomotors geführt ist und einen hinteren Sitz aufweist, der an ein Ventilelement (40) des Dreiwegeventils in Anlage gelangt, um die Arbeitskammer von der Umgebungsatmosphäre zu trennen, wobei die Reaktionsvorrichtung eine Reaktionsscheibe (62) aus Kautschuk oder Elastomer aufweist, die zwischen der mit den Kolben des Hauptzylinders verbundenen Schubstange (60) und einem Taster (64) angebracht ist, welcher im Kolben des Servomotors zwischen der Reaktionsscheibe (62) und dem Verteilertauchkolben (22) angebracht ist, um eine der Bremskraft entsprechende elastische Reaktion zum Bremspedal zu übertragen, **dadurch gekennzeichnet, dass** die Hülse (44) ein Mittel (26) zum schnellen Vorrücken des Kolbens (10) bildet, das auf das Dreiwegeventil (24) einwirkt, so dass ausgehend von der Ruhestellung eine kleine Vorwärtsbewegung der Steuerstange (20) die hintere Kammer (6) mit der Umgebungsatmosphäre verbindet, wodurch eine Vorwärtsbewegung des Kolbens (10) bewirkt wird.

2. Pneumatischer Unterstützungsservomotor nach Anspruch 1, **dadurch gekennzeichnet, dass** die Reaktionsscheibe (62) und der Taster (64) kreisförmig sind und das Ende des Tasters (64), das die Reaktionsscheibe berührt, eine in Bezug auf die Fläche der Reaktionsscheibe (62) verringerte Fläche hat.

3. Pneumatischer Unterstützungsservomotor nach Anspruch 2, **dadurch gekennzeichnet, dass** die Fläche der Reaktionsscheibe mindestens das Vierfache der Fläche des Tasterendes beträgt.

4. Pneumatischer Unterstützungsservomotor nach einem der Ansprüche 1 bis 3, **dadurch gekennzeichnet, dass** sich der Taster radial innerhalb der Hülse (44) und axial auf Höhe des vorderen Endes dieser Hülse befindet.

5. Pneumatischer Unterstützungsservomotor nach einem der Ansprüche 1 bis 4, **dadurch gekennzeichnet, dass** im Ruhezustand ein verringertes axiales Spiel (G) zwischen dem hinteren Ende der Hülse (44) und dem Ventilelement (40) des Dreiwegeventils gebildet ist.

6. Pneumatischer Unterstützungsservomotor nach Anspruch 5, **dadurch gekennzeichnet, dass** das verringerte axiale Spiel (G) 0,2 Millimeter beträgt.

7. Pneumatischer Unterstützungsservomotor nach Anspruch 5 oder 6, **dadurch gekennzeichnet, dass** im Ruhezustand zwischen dem Taster (64) und der Reaktionsscheibe (62) ein verringertes axiales Spiel (J0) gebildet ist, das jedoch größer ist als das Spiel (G) zwischen dem hinteren Ende der Hülse (44) und dem Ventilelement (40) des Dreiwegeventils.

8. Pneumatischer Unterstützungsservomotor nach Anspruch 7, **dadurch gekennzeichnet, dass** das axiale Spiel (JO) zwischen dem Taster (64) und der Reaktionsscheibe 0,3 Millimeter beträgt.
